# EUROPÄISCHE PATENTSCHRIFT

(11) **EP 0 688 239 B1**
(45) Veröffentlichungstag und Bekanntmachung des Hinweises auf die Patenterteilung: **23.10.1996**
(21) Anmeldenummer: 94910371.7
(22) Anmeldetag: 04.03.1994
(51) Int. Cl.: B01D 53/34, B01D 45/16, F22B 1/18

(54) **VERFAHREN UND VORRICHTUNG ZUR ENERGIENUTZUNG VON RAUCHGASEN IN KOHLEGEFEUERTEN KRAFTWERKEN**
PROCESS AND DEVICE FOR UTILIZING THE ENERGY OF FLUE GASSES FROM COAL-FIRED POWER STATIONS
PROCEDE ET DISPOSITIF POUR UTILISER L'ENERGIE DE GAZ DE FUMEE D'INSTALLATIONS D'ENERGIE A CHARBON

(30) Priorität: 05.03.1993 DE 4307608
(43) Veröffentlichungstag der Anmeldung: 27.12.1995
(73) Patentinhaber: VEAG VEREINIGTE ENERGIEWERKE AKTIENGESELLSCHAFT, D-12681 Berlin (DE)
(72) Erfinder: KRÖDEL, Bernd, D-12627 Berlin (DE); HINZE, Bernhard, D-39261 Zerbst (DE); SUHR, Ludwig, D-45139 Essen (DE)
(74) Vertreter: Zinken-Sommer, Rainer
(86) Internationale Anmeldenummer: EP9400664
(87) Internationale Veröffentlichungsnummer: WO9420198

(56) Entgegenhaltungen:
- WO-A-87/05686
- DE-A- 2 627 661
- DE-A- 3 446 552
- DE-A- 3 634 126
- FR-A- 2 586 204
- US-A- 3 258 063

## Beschreibung

Die Erfindung betrifft ein Verfahren und eine Vorrichtung zur Energienutzung von Rauchgasen in kohlegefeuerten Kraftwerken, wobei die Rauchgase in einem Rauchgaswäscher gereinigt und in einen Kühlturm abgeleitet werden.

Bekannt ist ein Waschturm für eine Anlage zur Entschwefelung von Rauchgas hinter einer Feuerung, insbesondere hinter einer Kraftwerkskesselfeuerung, wobei nach den Sprühebenen für Waschflüssigkeit das Rauchgas im Wäscher durch einen Tropfengrobabscheider und danach durch einen Feinabscheider, die beide über separate Flüssigkeits-Abreinigungssysteme verfügen, geleitet werden, bevor sie in den Rauchgasabzug gelangen (DE-A-36 34 126).

Weiterhin bekannt ist ein Verfahren zur Behandlung des beim Spülen eines mit ammonium-sulfathaltigem Gas beaufschlagten Wärmetauschers, wobei das im Wärmetauscher gewaschene Gas durch einen Tröpfchenabscheider geleitet wird, der über Sprühsysteme abgereinigt wird und daß anschließend das schwach saure bis neutrale Umlaufwasser der Sprühsysteme mit dem bei dem Reinigen des Wärmetauschers anfallenden sauren Spülwasser vermischt und die so entstandene Mischung als Waschwasser zumindest für die Eintrittsseite des Tröpfchenabscheiders eingesetzt wird (DE-C-37 32 191).

Die Prallflächen der bekannten Tropfenabscheider weisen eine Vielzahl von unterschiedlichen wellenförmig geformten Platten auf (DE-C-33 48 023, DE-C-31 37 795, DE-A-27 26 524). Allen bekannten Tröpfchenabscheidern ist gemeinsam, daß sie die bei der Abreinigung und gleichzeitigen Kühlung der Prallflächen mit Flüssigkeit übertragene Energie energetisch nicht nutzen. Des weiteren verursacht die notwendige Bespülung der Prallflächen die Installation und den Betrieb eines Flüssigkeitskreislaufes.

Die DE-C-34 46 552 definiert eine Waschflüssigkeit aufnehmende Bodenkammer, die unterhalb einer zentrisch ausgebildeten und mit Kontaktkörpern versehenen Waschsäule und unterhalb von um diese Waschsäule koaxial angelegten Wärmetauschern für die Rauchgaskühlung angeordnet ist. Der Rauchgaskühler umschließt die Waschzone ringförmig innerhalb der gesamten Kühler-Wäscher-Anordnung. Hier erfolgt die Integration des Kühlers als eine Komponente, die räumlich um den Wäscherteil herum angeordnet ist, so daß sich die Abmessungen von Wäscher und Kühler gegenseitig sehr stark beeinflussen. Es erfolgt keine Aufnahme und gleichzeitige Neutralisation von am Kühler auskondensierenden Säuren im Wäschersumpf zusammen mit der Waschflüssigkeit. Auch wird der Kühler nicht diskontinuierlich mit Waschflüssigkeit aus dem Wäschersumpf bespült. In DE-C-34 46 552 übernimmt der Rauchgaskühler hauptsächlich eine energetische Funktion, d. h. Kühlung und Wäsche sind technologisch und konstruktiv hintereinander geschaltet. Der Rauchgaskühler wird nicht als "Säurefalle" eingesetzt und übernimmt anteilig keine Waschfunktion. Der Kühler ist um den gesamten Wäscherteil herum angeordnet. Der Nachteil dessen ist eine gegenseitige Beeinflussung der gesamten Konstruktion von Wäscher und Kühler, was für die Herstellung und Instandhaltung sich sehr kostenaufwendig und nachteilig auswirkt. Weiterhin weist die Vorrichtung keinen Tropfenabscheider auf. Auch der energetische Inhalt der mitgerissenen Tropfen wird nicht genutzt.

Der Erfindung liegt die Aufgabe zugrunde, den Energieinhalt von Rauchgasen kohlegefeuerter Kraftwerke nach der Rauchgaswäsche im Waschturm sinnvoll energetisch und damit verbundene Feuchteanteile stofflich zu nutzen.

Dies wird erfindungsgemäß dadurch erreicht, daß die entschwefelten Rauchgase in dem Tropfenabscheider vor Rauchgasaustritt bis zum Wassertaupunkt gekühlt und die entzogene fühlbare und latente Wärme zur Vorwärmung des Maschinenkondensats unmittelbar nach Maschinenkondensator eingesetzt sowie der dazu bisher benötigte Anzapfdampf für eine erste Niederdruckvorwärmstufe zur zusätzlichen Erzeugung elektrischer Leistung und somit zur Erhöhung der Kraftwerksleistung eingesetzt wird.

Ebenfalls ist es möglich, daß die Rauchgase im Eintrittsbereich des Rauchgaswäschers durch einen säurefesten Wärmetauscher bis unterhalb des Säuretaupunktes abgekühlt, abtropfende Säuren vom Sumpf des Rauchgaswäschers aufgenommen sowie neutralisiert und die abgekühlten Rauchgase unmittelbar in die Waschzone eingeführt werden. Das Kühlmittel des Tropfenabscheiders wird dabei zum säurefesten Wärmetauscher geführt. Die im tropfenabscheidenden Rauchgaskühler auskondensierte Rauchgasfeuchte wird stofflich zum Zeitpunkt des Phasenübergangs zur Bespülung und danach als Beitrag zur Deckung des Wasserbedarfes der Rauchgasentschwefelungsanlage genutzt.

Die erfindungsgemäße Vorrichtung ist so gestaltet, daß der an sich bekannte Tropfenabscheider entweder in den Wellentälern seiner Prallwände mit Kühlrohren versehen ist und/oder vereinfachend auch aus Kühlrohren führenden geraden Membranwänden aufgebaut ist, wobei allein durch die versetzte Rohranordnung bei benachbarten geraden Membranrohrwänden ebenfalls eine wellenförmige Rauchgas-strömung zwecks Tropfenabscheidung gesichert ist.

Gleichfalls ist es möglich, daß im Einströmbereich des Wäschers ein an sich bekannter und mit einem Abreinigungssystem versehener säurefester Wärmetauscher über einen Wäschersumpf, der gleichfalls als Säureauffangwanne dient, angeordnet ist. In diesem Falle ist der Tropfenabscheider mit dem säurefesten Wärmetauscher über eine Rohrleitung für das wiederaufheizbare Kühlmedium verbunden.

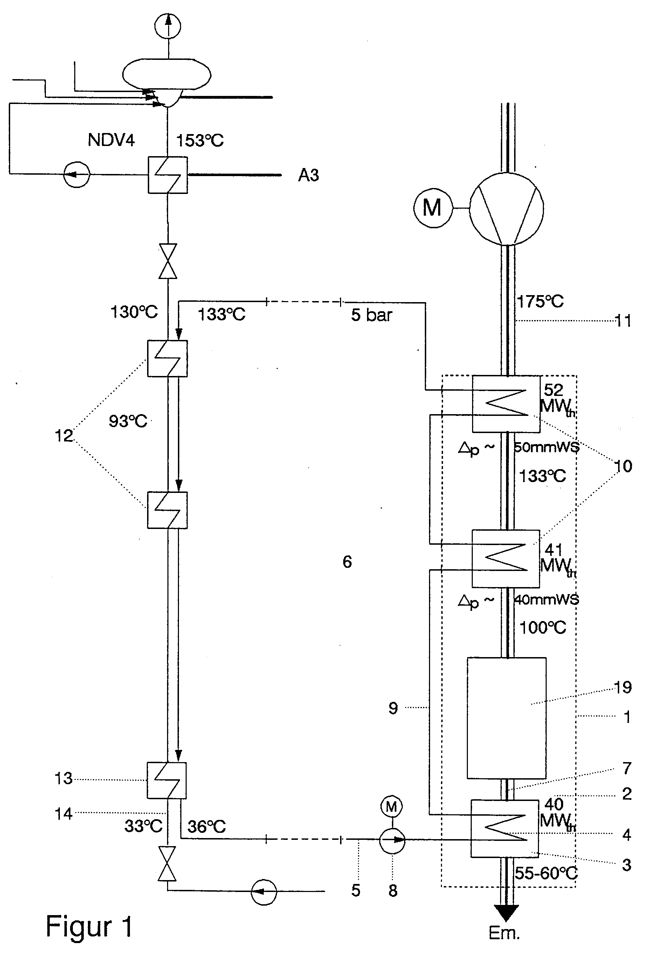

Durch die Erfindung werden folgende Vorteile erreicht:
1. Ein bisher mit dem abgeführten Rauchgasstrom aufgetretener Abgasverlust wird in Nutzenergie umgewandelt, wodurch eine Erhöhung des Kraftwerkswirkungsgrades eintritt.
2. Durch Auskondensation eines Feuchteanteiles des Rauchgases wird gewissermaßen vom Rauchgas selbst eine an sich notwendige Bespülung der Tropfenabscheider organisiert.
3. Durch Auskondensation eines Feuchteanteils des Rauchgases wird zumindest ein Teil des Wasserbedarfes der Rauchgasentschwefelungsanlage unmittelbar aus dem mit der Rohbraunkohle zugeführten Wassers gedeckt und somit der Brauchwasserbedarf reduziert.
4. Zusammen mit säurefesten Rauchgaskühlern vor Eintritt der Rauchgase in die Waschzone ergibt sich anlagentechnisch einerseits eine Erweiterung des Rauchgaswärmeverschiebungssystems und andererseits eine Vereinfachung der gesamten Maschinenkondensatvorwärmung (Wasser-Wasser-Wärmetauscher statt Abdampfkondensatoren - Fig. 1).
5. Durch die versetzte Rohranordnung bei benachbarten und geraden Membranrohrwänden wird zwecks Tropfenabscheidung eine wellenförmige Rauchgasströmung gesichert, wodurch eine vereinfachte Gesamtkonstruktion erreicht wird.

An einem Ausführungsbeispiel wird die Erfindung näher erläutert. Dabei zeigt Figur 1 das Verfahren zur Nutzung der am Wäscheraustritt noch vorhandenen fühlbaren und latenten Wärme des Rauchgases.

Der Rauchgaswäscher 1 besitzt im Rauchgasaustrittsbereich 2 einen Tropfenabscheider 3, der zusätzlich mit Kühlrohren 4 ausgerüstet ist. Als Kühlmittel dient separat geführtes Wasser 5 eines Wärmeverschiebesystems 6. Die rauchgasseitigen Flächen der Kühlrohre 4 sind primär Wärmeübertragungsflächen zur Kondensation von Rauchgasfeuchte und somit zur prozeßbedingten Kondensatbespülung durch das Rauchgas selbst sowie gleichzeitig Tröpfchenauffangrinnen. Das die Rauchgaswärme aufnehmende Kühlwasser 5 des Wärmeverschiebesystems 6 wird im Gegenstrom und quer zum Rauchgas 7 mittels Wasserpumpe 8 gefördert. Das im tropfenabscheidenden und sich selbst spülenden Rauchgaskühler 5 bis auf 60 - 70 °C, vorzugsweise 65 °C, aufgewärmte Wasser des Wärmeverschiebesystems 6 wird mittels Leitung 9 einem säurefesten Wärmetauscher 10 zugeführt, der ebenfalls Bestandteil des Wärmeverschiebesystems 6 ist und der sich im Wäschereintrittsbereich oder auch im Rauchgaskanal 11 vor dem Wäscher 1 befindet und dort zu einer weiteren Aufwärmung des Wassers 5 vom Wärmeverschiebesystem 6 beiträgt. Die in den Wärmetauschern 4; 10 übertragene Rauchgaswärme wird in den Wasser-Wasser-Wärmetauschern 12; 13 letztlich an das Maschinenkondensat 14 zu dessen Vorwärmung abgegeben. Die im tropfenabscheidenden Rauchgaskühler 3 auskondensierte Rauchgasfeuchte fließt von selbst über die Tröpfchenfangrinnen 18 sowie an den Kühlrohren 4 in den Suspensionskreis der Rauchgaswäsche 19.

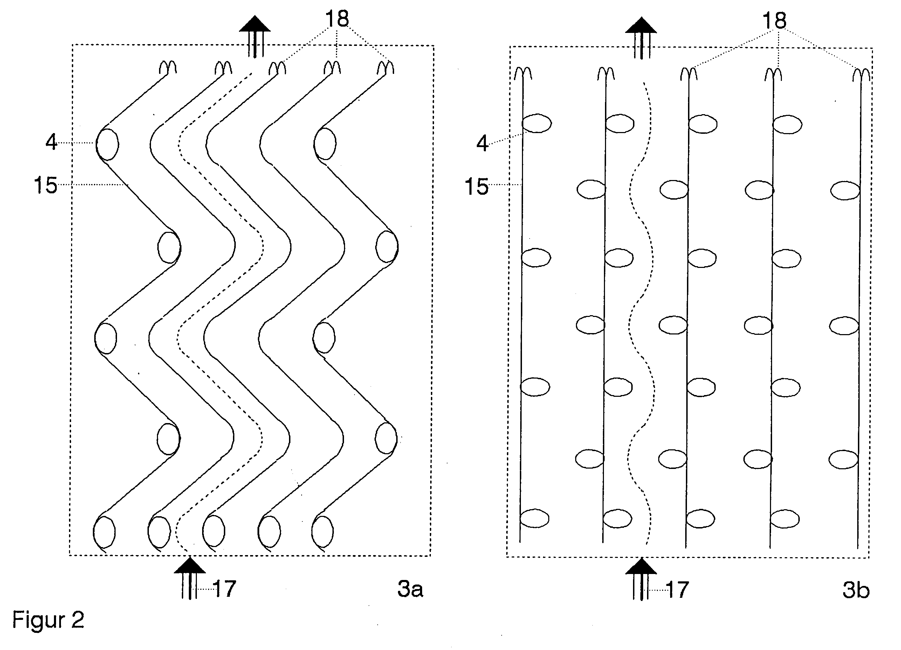

Figur 2 zeigt den tropfenabscheidenden Rauchgaskühler 3a in bekannter Ausführung mit gewellten Rauchgasströmungsflächen 15. In den Wellentälern sind erfindungsgemäß die Kühlrohre 4 angeordnet. Durch die Kondensation der Rauchgasfeuchte an den Außenflächen der Kühlrohre 4 tritt ein Selbstspülungseffekt ein. Der tropfenabscheidende und sich selbstreinigende Rauchgaskühler 3b weist an geraden Strömungsblechen 16 versetzt angeordnete, vorzugsweise ovale Kühlrohre 4 auf, infolge ihrer versetzten Anordnung ebenfalls eine wellenförmige und tröpfchenabscheidende Rauchgasströmung 17 erzwingen.

### Aufstellung der verwendeten Bezugszeichen

- 1: Rauchgaswäscher
- 2: Rauchgasaustrittsbereich
- 3: Tropfenabscheider
- 3a: Rauchgaskühler
- 3b: Rauchgaskühler
- 4: Kühlrohr
- 5: Wasser
- 6: Wärmeverschiebesystem
- 7: Rauchgas
- 8: Wasserpumpe
- 9: Leitung
- 10: Wärmetauscher
- 11: Rauchgaskanal
- 12: Wasser-Wasser-Wärmetauscher
- 13: Wasser-Wasser-Wärmetauscher
- 14: Maschinenkondensat
- 15: Rauchgasströmungsfläche
- 16: Strömungsblech
- 17: Rauchgasströmung
- 18: Tröpfchenfangrinne
- 19: Rauchgaswäsche

## Patentansprüche

1. Verfahren zur Energienutzung von Rauchgasen in kohlegefeuerten Kraftwerken, wobei die Rauchgase in den unteren Bereich eines Rauchgaswäschers eingeleitet, im Gegenstrom naßentschwefelt und nach dem Durchströmen eines im Austrittsbereich des Wäschers befindlichen Tropfenabscheiders dort abgekühlt und in einen Kühlturm abgeleitet werden,
**gekennzeichnet dadurch**,
daß die entschwefelten Rauchgase in dem Tropfenabscheider (3) vor Rauchgasaustritt bis zum Wassertaupunkt gekühlt und die entzogene fühlbare und latente Wärme zur Vorwärmung des Maschinenkondensats (14) unmittelbar nach Maschinenkondensator eingesetzt sowie der dazu bisher benötigte Anzapfdampf für eine erste Niederdruckvorwärmstufe (13) zur zusätzlichen Erzeugung elektrischer Leistung eingesetzt wird.

2. Verfahren nach Anspruch 1, gekennzeichnet dadurch, daß die nichtentschwefelten Rauchgase im Eintrittsbereich des Rauchgaswäschers (1) durch einen säurefesten Wärmetauscher (10) bis unterhalb des Säuretaupunktes abgekühlt, abtropfende Säuren vom Sumpf des Rauchgaswäschers (1) aufgenommen sowie neutralisiert und die abgekühlten Rauchgase unmittelbar in die Waschzone eingeführt werden.

3. Verfahren nach Anspruch 1, gekennzeichnet dadurch, daß das Kühlmedium des Tropfenabscheiders (3) zum säurefesten Wärmetauscher (10) geführt wird.

4. Verfahren nach Anspruch 1, gekennzeichnet dadurch, daß die im Tropfenabscheider (3) auskondensierte Rauchgasfeuchte stofflich als Beitrag zur Deckung des Wasserbedarfes der Rauchgasentschwefelungsanlage genutzt wird.

5. Vorrichtung zur Energienutzung von Rauchgasen in kohlegefeuerten Kraftwerken, wobei nach einem Dampfkessel ein Rauchgaswäscher (1) angeordnet ist, der einen Wäschersumpf, einen unteren Einströmbereich, eine zentrale Wäscherzone und einen oberen Ausströmbereich mit einem davor angeordneten Tropfenabscheider aufweist,
**gekennzeichnet dadurch**,
daß der Tropfenabscheider (3) in den Wellentälern seiner Prallwände (15) mit Kühlrohren (4) versehen ist und/oder aus Kühlrohren (4) führenden geraden Strömungsblechen (16) aufgebaut ist.

6. Vorrichtung nach Anspruch 5, gekennzeichnet dadurch, daß im Einströmbereich des Wäschers (1) ein mit einem Abreinigungssystem versehener säurefester Wärmetauscher (10) über einen Wäschersumpf, der gleichfalls als Säureauffangwanne dient, angeordnet ist.

7. Vorrichtung nach Anspruch 5, gekennzeichnet dadurch, daß der Tropfenabscheider (3) mit dem säurefesten Wärmetauscher (10) über eine Rohrleitung (9) für das weiteraufheizbare Kühlmedium verbunden ist.

## Claims

1. A procedure for exploiting the energy contained in flue gases in coal-fired power stations, wherein the flue gases are fed into the lower area of a flue gas scrubber, subjected to wet desulfurization in the counterflow, passed through a droplet separator in the outlet area of the scrubber, cooled down and carried off to a cooling tower,
**characterized in that**
the desulfurized flue gases are cooled to the water dew point in the droplet separator (3) before exiting and the extracted sensible and latent heat is used to preheat the machine condensate immediately after the condenser and that the bleeder steam conventionally required for an initial low-pressure preheating stage (13) is utilized to generate additional electric power.

2. A procedure as claimed in claim 1, **characterized in that** the non-desulfurized flue gases in the inlet area of the flue gas scrubber (1) are cooled by means of an acidproof heat exchanger (10) to below the acid dew point, the dripping acid is collected in the sump of the flue gas scrubber (1) and neutralized, and the cooled flue gases are fed directly into the scrubbing area.

3. A procedure as claimed in claim 1, **characterized in that** the cooling agent used in the droplet separator (3) is fed into the acidproof heat exchanger (10).

4. A procedure as claimed in claim 1, **characterized in that** the moisture condensed out of the flue gases in the droplet separator (3) is utilized to help cover the water requirements of the flue gas desulfurization unit.

5. A device for exploiting the energy contained in flue gases in coal-fire power stations, wherein a flue gas scrubber (1) is arranged subsequent to a steam boiler and the flue gas scrubber is provided with a sump, an inlet area at its bottom end, a centrally located scrubbing area and a droplet separator arranged before the outlet area at the top end,
**characterized in that**
condenser tubes (4) are provided in the grooves of the baffle walls (15) of the droplet separator (3) and/or the droplet separator (3) is outfitted with straight baffles (16) to which condenser tubes (4) are attached.

6. Device as claimed in claim 5, **characterized in that** an acidproof heat exchanger (10) with cleaning system is arranged in the inlet area of the scrubber (1) above a sump which also serves as an acid collection tank.

7. Device as claimed in claim 5, **characterized in that** the droplet separator (3) is connected to the acidproof heat exchanger (10) via a pipe (9) for the cooling agent which may be reheated.

## Revendications

1. Procédé pour utiliser les gaz de fumée de centrales à chauffage au charbon, les gaz de fumée étant introduits dans la zone inférieure d'un laveur des gaz de fumée, désulfurés par voie humide et à contre-courant et, après avoir passé par le séparateur de gouttes situé dans la zone de sortie du laveur, où ils sont refroidis, évacués vers une tour de refroidissement,
caractérisé en ce que les gaz de fumée désulfurés, avant de sortir du séparateur de gouttes (3), sont refroidis jusqu'au point de rosée de l'eau et que la chaleur dégagée sensible et latente est utilisée pour réchauffer immédiatement en aval du condenseur de machine le condensé de machine (14) et que la vapeur soutirée jusqu'ici à cet effet est utilisée dans un premier étage de réchauffage à basse pression (13) pour la production de puissance électrique complémentaire.

2. Procédé selon la revendication 1,
caractérisé en ce que les gaz de fumée non désulfurés sont refroidis dans la zone d'entrée du laveur des gaz de fumée (1) par un échangeur de chaleur (10) résistant aux acides jusqu'à une température inférieure au point de rosée des acides, que les acides s'égouttants s'accumulent au fond du laveur des gaz de fumée (1), qu'ils y sont neutralisés et que les gaz de fumée refroidis entrent directement dans la zone de lavage.

3. Procédé selon la revendication 1,
caractérisé en ce que le milieu de refroidissement du séparateur de gouttes (3) est amené vers l'échangeur de chaleur (10) résistant aux acides.

4. Procédé selon la revendication 1,
caractérisé en ce que l'humidité des gaz de fumée condensée dans le séparateur de gouttes (3) est utilisée pour contribuer à la couverture des besoins en eau de l'installation de désulfuration des gaz de fumée.

5. Dispositif pour utiliser l'énergie des gaz de fumée de centrales à chauffage au charbon, la chaudière à vapeur étant suivie d'un laveur des gaz de fumée (1) comprenant un fond, une zone d'entrée inférieure, une zone de lavage centrale et une zone de sortie supérieure avec, en amont, un séparateur de gouttes,
caractérisé en ce que le séparateur de gouttes (3) est équipé dans les creux de ses chicanes ondulées (15) de tubes de refroidissement (4) et/ou qu'il est constitué de tôles à écoulement droites (16) avec tubes de refroidissement (4).

6. Dispositif selon la revendication 5,
caractérisé en ce qu'un échangeur de chaleur (10) résistant aux acides et équipé d'un système de nettoyage est disposé dans la zone d'entrée du laveur (1) au-dessus d'un fond de laveur faisant à la fois office de récipient de réception des acides.

7. Dispositif selon la revendication 5,
caractérisé en ce que le séparateur des gouttes (3) est relié à l'échangeur de chaleur (10) résistant aux acides par une conduite (9) pour le milieu de refroidissement à réchauffer.
